(19) Europäisches Patentamt
European Patent Office
Office européen des brevets

(11) Veröffentlichungsnummer : **0 384 125 B1**

(12) **EUROPÄISCHE PATENTSCHRIFT**

(45) Veröffentlichungstag der Patentschrift :
**12.05.93 Patentblatt 93/19**

(51) Int. Cl.$^5$ : **C08F 246/00,** C08F 220/58, D06M 15/29

(21) Anmeldenummer : **90101081.9**

(22) Anmeldetag : **19.01.90**

# (54) Filmbildende, selbstvernetzende wässrige Kunststoffdispersion.

(30) Priorität : **25.01.89 DE 3902067**

(43) Veröffentlichungstag der Anmeldung :
**29.08.90 Patentblatt 90/35**

(45) Bekanntmachung des Hinweises auf die Patenterteilung :
**12.05.93 Patentblatt 93/19**

(84) Benannte Vertragsstaaten :
**AT BE CH DE DK ES FR GB IT LI NL SE**

(56) Entgegenhaltungen :
**EP-A- 0 080 635**
**DE-A- 1 620 153**

(73) Patentinhaber : **Röhm GmbH**
**Kirschenallee Postfach 4242**
**W-6100 Darmstadt 1 (DE)**

(72) Erfinder : **Langerbeins, Klaus, Dr.**
**Uhlandstrasse 56**
**W-6070 Langen (DE)**
Erfinder : **Fink, Herbert, Dr.**
**Bahnhofstrasse 39**
**W-6101 Bickenbach (DE)**
Erfinder : **Klesse, Wolfgang, Dr.**
**Tucholskyweg 47**
**W-6500 Mainz 31 (Lerchenberg) (DE)**
Erfinder : **Tessmer, Dieter**
**Feuerbachstrasse 77**
**W-6090 Rüsselsheim (DE)**

EP 0 384 125 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine filmbildende, selbstvernetzende wäßrige Kunststoffdispersion, ein Verfahren zur ihrer Herstellung und ihre Verwendung zum Ausrüsten von Faserprodukten. Insbesondere betrifft die Erfindung die Verminderung der Freisetzung von Formaldehyd aus solchen Dispersionen. Eine Kunststoffdispersion wird als filmbildend angesehen, wenn sie in dünner Schicht auf einer festen Unterlage bei Temperaturen zwischen 0 und 120°C, gegebenenfalls nach Zusatz eines Filmbildungshilfsmittels, zu einem geschlossenen Film auftrocknet.

Stand der Technik

Die Ausrüstung und Verfestigung von Fasergebilden, wie Geweben, Vliesen und Watten aus Textilfasern oder -garnen, durch Imprägnieren mit selbstvernetzenden wäßrigen Kunststoffdispersionen ist allgemein bekannt. Als vernetzungsfähige Gruppen enthalten diese Dispersionen in der Regel einpolymerisierte Einheiten von N-Methylolamiden der Acryl- und/oder Methacrylsäure. Durch die Vernetzung bei Temperaturen von 100 bis 160°C erlangt die Imprägnierung eine hohe Beständigkeit gegen Lösemittel der Chemischreinigung und gegen Weichmacher.

Aus der deutschen Patentschrift 32 02 093 sind Textilimprägnierungen mittels formaldehyd- und acrylnitrilfreien Kunststoffdispersionen auf Acrylatbasis bekannt, bei denen durch einen Gehalt an polymerisierten Einheiten von ungesättigten Carbonsäuren und von Hydroxyalkylestern solcher Säuren im Vergleich zu herkömmlichen nicht vernetzbaren Imprägnierungen eine verbesserte Beständigkeit gegen die Einwirkung von Lösemitteln, die in der Chemischreinigung verwendet werden, und von organischen Weichmachern erreicht wird. Auf die Mitverwendung von N-Methylol-acrylamid oder -methacrylamid wurde dabei gänzlich verzichtet, so daß die Gefahr der Freisetzung von Formaldehyd durch hydrolytische Spaltung der genannten Monomeren oder der daraus hervorgegangenen polymerisierten Einheiten grundsätzlich ausgeschlossen war. Allerdings wird dabei ein geringerer Grad an Beständigkeit gegenüber Löse- und Weichmachungsmitteln als beim Einsatz selbstvernetzender Kunststoffdispersionen erreicht.

Nach EP-B 80 635 wird die Abgabe von Formaldehyd aus selbstvernetzenden wäßrigen Kunststoffdispersionen, die N-Methylol-acrylamid oder -methacrylamid sowie Hydroxyalkylester ungesättigter Carbonsäuren als polymerisierte Einheiten enthalten, deutlich vermindert, wenn die Dispersionen 1 bis 5 Gew.-% Harnstoff enthalten. Eine gewisse Verminderung der Beständigkeit von Textilausrüstungen, die mit derartigen Dispersionen hergestellt worden sind, gegen die Einwirkung von Lösemitteln der Chemischreinigung oder von Weichmachern mußte allerdings auch in diesem Fall in Kauf genommen werden.

Eine ähnliche, wenn auch etwas geringere Verminderung der Beständigkeitseigenschaften ist bei Textilimprägnierungen mit selbstvernetzenden Kunststoffdispersionen nach EP-B 143 175, die Äthylenharnstoff als Formaldehydfänger enthalten, festzustellen. Weitere niedermolekulare Formaldehydfänger beschreiben R.S. Perry et.al. in "Textile Chemists an Colorists", Vol.12 (1980), S.311-316 sowie H. Bille und H. Petersen in "Melliand Textilberichte", Bd.57 (1976), S.162-165.

Aufgabe und Lösung

Ziel der Erfindung war, filmbildende, selbstvernetzende wäßrige Kunststoffdispersionen zur Verfügung zu stellen, die sich durch eine niedrige Formaldehydfreisetzung auszeichnen, sich aber in der Beständigkeit der damit hergestellten Filme gegenüber Lösemitteln und Weichmachern von entsprechenden Dispersionen ohne formaldehydbindende Bestandteile nicht nachteilig unterscheiden. Die Aufgabe wird bei einer derartigen Kunststoffdispersion, enthaltend ein Emulsionspolymerisat aus

A) einem überwiegenden Anteil eines äthylenisch ungesättigten, radikalisch polymerierbaren Monomeren oder eines Gemisches solcher Monomeren, welches ein Polymerisat bzw. Copolymerisat mit einer Glasübergangstemperatur nicht über 120°C ergibt,

B) N-Methylol-acrylamid oder -methacrylamid oder einem verkappten Derivat davon, und gegebenenfalls

C) weiteren äthylenisch ungesättigten, radikalisch polymerierbaren Monomeren,

erfindungsgemäß dadurch gelöst, daß das Emulsionspolymerisat weiterhin Einheiten von

D) einem äthylenisch ungesättigten, radikalisch polymerisierbaren Monomer mit der Atomgruppierung

$$-\overset{/}{N}-CO-NH-$$

enthält. Diese Struktur wird nachfolgend als Ureidogruppe bezeichnet. Vorzugsweise liegt sie als Bestandteil eines 5- oder 6-gliedrigen Heterocyclus vor. Geeignet sind also radikalisch polymerisierbare Abkömmlinge von Harnstoffderivaten, die als niedermolekulare Formaldehydfänger bereits bekannt sind.

Überraschenderweise wird durch den erfindungsgemäßen Aufbau des Emulsionspolymerisats der Gehalt an freiem und an abspaltbarem Formaldehyd in der Kunststoffdispersion gegenüber herkömmlichen selbstvernetzenden Kunststoffdispersionen erheblich vermindert, ohne daß die Beständigkeit der damit herstellbaren Filme bzw. Textilimprägnierungen gegen organische Lösungsmittel oder Weichmacher vermindert wird. Wie die in den Beispielen enthaltenen Vergleichsversuche zeigen, wird sogar eine Verbesserung in diesen Eigenschaften erreicht. Dagegen bewirkt der bekannte Einsatz von Harnstoff offenbar eine Vorvernetzung in der Kunststoffdispersion vor der Filmbildung mit der Folge, daß die Methylolamidgruppen nach der Filmbildung für eine ausreichende Vernetzung nicht mehr zur Verfügung stehen.

Die Beständigkeit der Filme aus solchen Emulsionspolymerisaten gegen Lösemittel und Weichmacher steht erfahrungsgemäß mit der Dichte der Vernetzungsbrücken in Zusammenhang. Die verminderte Vernetzungsdichte von Filmen aus bekannten selbstvernetzenden Kunststoffdispersionen, die niedermolekulare Formaldehydfänger enthalten, erklärt ihre verminderte Beständigkeit. Die unverändert hohe Beständigkeit der Filme aus erfindungsgemäßen Kunststoffdispersionen im Vergleich zu Filmen, die aus bekannten, freien oder abspaltbaren Formaldehyd enthaltenden Kunststoffdispersionen hergestellt worden sind, läßt auf eine unverändert hohe Vernetzungsdichte schließen. Sie kann dadurch erklärt werden, daß die Reaktion der eingebauten Ureidogruppen mit freiem Formaldehyd zu Gruppierungen führt, die unter Bildung von Vernetzungsbrücken weiterreagieren können.

Einpolymerisierte Einheiten mit seitenständigen Äthylenharnstoffgruppierungen sind als Bestandteile von Emulsionspolymerisaten aus DE-A 1 284 006, DE-A 26 26 845 und DE-A 34 43 964 bekannt, jedoch wurden sie bisher nicht gezielt in Kombination mit N-Methylolamiden der Acryl- und/oder Methacrylsäure eingesetzt. Die synergistische Wirkung dieser beiden Monomerarten ist daher noch nie beobachtet und zur Verminderung der Formaldehydfreisetzung aus selbstvernetzenden Dispersionen angewendet worden.

Ausführung der Erfindung

Als Monomerkomponente A sind am Aufbau des Emulsionspolymerisats entweder ein oder mehrere Monomere beteiligt, deren Homopolymerisate Glasübergangstemperaturen nicht über 120°C haben, oder ein Gemisch von mehreren Monomeren, dessen Copolymerisat eine Glasübergangstemperatur nicht über 120°C hat. Zur ersten Gruppe gehören vorzugsweise Alkylester der Acryl- und/oder Methacrylsäure mit 1 bis 20 C-Atomen im Alkylrest. Bevorzugte Monomere dieser Gruppe sind Äthyl-, n-Butyl- und 2-Äthyl-hexyl-acrylat. Als Comonomere in der Komponente A kommen beispielsweise Alkylester der Methacrylsäure mit 1 bis 4 Kohlenstoffatomen im Alkylrest, vor allem Methyl- und n-Butylmethacrylat, sowie Styrol und Acrylnitril in Betracht. In der Regel machen Alkylester der Acryl-und/oder Methacrylsäure mit 1 bis 12 Kohlenstoffatomen im Alkylrest oder/und Styrol mehr als 90 Gew.-% der Komponente A aus. Diese Komponente bildet wiederum meistens 80 bis 99 Gew.-% des Emulsionspolymerisats.

Die selbstvernetzenden Eigenschaften des Emulsionspolymerisats beruhen auf seinem Gehalt an den Einheiten B von N-Methylolacrylamid oder -methacrylamid oder verkappten Derivaten davon, die beim Erhitzen einer aus der Dispersion erzeugten Textilimprägnierung in gleicher Weise vernetzend wirken. Solche Derivate sind z.B. die N-(Alkoxy-methyl)-amide der Acryl- und/oder Methacrylsäure. Vorzugsweise machen die Einheiten B 1 bis 10 Gew.-% des Emulsionspolymerisats aus.

Am Aufbau des Emulsionspolymerisats können als zusätzliche Komponente C Einheiten von weiteren äthylenisch ungesättigten, radikalisch polymerierbaren Monomeren beteiligt sein. Dazu gehören vorzugsweise ungesättigte Carbonsäuren, wie Acryl- und/oder Methacrylsäure, Malein-, Fumar- und Itakonsäure, die Anteile von 0,1 bis 10 Gew.-% des Emulsionspolymerisats ausmachen können. Weitere verwendbare Comonomere sind z.B. Acryl- und/oder Methacrylamid, Hydroxyalkylester der Acryl- und/oder Methacrylsäure, mehrfunktionelle vernetzende Monomere, wie Diester der Acryl- und/oder Methacrylsäure von Diolen, in Anteilen von beispielsweise 1 bis 10 Gew.-%.

Als Komponente D sind in dem Emulsionspolymerisat in der Regel 0,5 bis 10, vorzugsweise 1 bis 5 Gew.-% Einheiten eines äthylenisch ungesättigten, radikalisch polymerisierbaren Monomeren mit der Atomgruppierung

```
    /
- N -CO - NH -
```

enthalten. Es handelt sich dabei um Abkömmlinge des Harnstoffs. Für ihre Wirksamkeit im Sinne der Erfindung ist wenigstens ein an ein Stickstoffatom der Harnstoffgruppierung gebundenes Wasserstoffatom wesentlich.

Bevorzugte Monomere D lassen sich durch die Formeln I bis III wiedergeben:

R - NR'- CO - NR'H   I

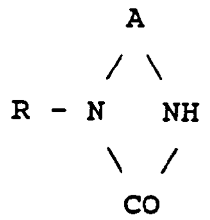

II

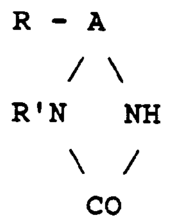

III

Darin bedeuten R einen zur radikalischen Polymerisation befähigten, äthylenisch ungesättigten Rest, R'ein Wasserstoffatom oder einen Alkylrest mit 1 bis 8 Kohlenstoffatomen und A eine 2- oder 3-gliedrige, gegebenenfalls eine Carbonylgruppe aufweisende Alkylengruppe. Bevorzugt sind Monomer der Formeln II oder III, die sich von Äthylenharnstoff oder Propylenharnstoff ableiten.

Der zur radikalischen Polymerisation befähigte, äthylenisch ungesättigte Rest R kann z.B. eine Vinyl-, Allyl-, Methallyl-, Acryloyl-, Methacryloyl-, 2-Vinyloxyäthyl-, 2-Acrylamido-äthyl-, 2-Methacrylamido-äthyl- oder 2-(beta-Carboxy-acrylamido)-äthyl-Gruppe sein. Vorzugsweise hat R die Struktur

$$CH_2 = CR' - CO - O - Alk -$$

worin R" Wasserstoff oder eine Methylgruppe und Alk eine Alkylenkette mit 2 bis 8 Kohlenstoffatomen bedeuten. Bevorzugte Monomere D sind

N-(2-Methacryloyl-oxyäthyl)-äthylenharnstoff,
N-(2-methacryloxyacetamidoäthyl)-N,N'-äthylenharnstoff,
Allylalkyläthylenharnstoff,
N-Methacrylamidomethyl-harnstoff,
N-Methacryloyl-harnstoff,
N-(3-[1,3-Diazacyclohexan-2-on]-propyl)-methacrylamid.

Das Emulsionspolymerisat kann nach üblichen Verfahren der Emulsionspolymerisation in wäßriger Phase in Gegenwart von wasserlöslichen, anionischen, kationischen oder nichtionischen Emulgiermitteln oder von Schutzkolloiden und von wasserlöslichen radikalbildenden Initiatoren, wie Alkaliperoxodisulfaten, bei Temperaturen von 20 bis 100°C hergestellt werden. Das Gemisch der Monomeren A bis D kann vor Beginn der Polymerisation in der wäßrigen Phase emulgiert oder im Laufe der Polymerisation allmählich nach Maßgabe des Umsatzes als solches oder in Form einer wäßrigen Emulsion zu der vorgelegten Wasserphase zugesetzt werden.

Bei einer bevorzugten Ausführungsform der Erfindung enthält das Emulsionspolymerisat wenigstens zwei verschiedene Polymerisatphasen, von denen die eine den überwiegenden Anteil der Komponente B und die andere den überwiegenden Anteil der Komponente D enthält. Vorzugsweise sind 90 bis 100 Gew.-% der Komponenten B und D jeweils in einer der Phasen enthalten. Die Komponenten A und C können in beiden Phasen in ähnlichen oder gleichen Gewichtsanteilen enthalten sein. Als "Phase" wird dabei ein Anteil des Emulsionspolymerisats bezeichnet, der in einem zeitlich begrenzten Abschnitt der Emulsionspolymerisation erzeugt wird und dessen Zusammensetzung sich von der der vorausgehenden bzw. nachfolgenden Phase unterscheidet. Man spricht auch von Mehrstufen-Emulsionspolymerisation oder Pfropfpolymerisation. Die Phasen können in jedem Latexteilchen einen kugelförmigen Kern und eine oder mehrere, den Kern umgebende Schalen bilden, jedoch ist eine solcher Aufbau für die erfindungsgemäßen Emulsionspolymerisate weder erwiesen noch grundsätzlich erforderlich. Es wird jedoch angenommen, daß die Phasen auf jeden Fall räumlich von einander geschiedene, aber einander berührende Domänen bilden. Wenn das Emulsionspolymerisat aus mehr als zwei Phasen aufgebaut ist, sollte die Komponente B hauptsächlich oder vollständig in der zuerst und die Komponente D hauptsächlich oder vollständig in der zuletzt erzeugten Phase enthalten sein.

Es wurde gefunden, daß die synergistische Wirkung der Komponenten B und D durch deren Trennung in zwei Phasen verstärkt wird. Vermutlich wird dadurch die Wahrscheinlichkeit, daß es zu Vernetzungsreaktionen zwischen den reaktiven Gruppen der Einheiten B und D desselben Latexteilchens kommt, vermindert und die Wahrscheinlichkeit für solche Vernetzungsreaktionen zwischen verschiedenen Latexteilchen erhöht. Weiterhin nimmt die Wahrscheinlichkeit für eine Reaktion der Einheiten D mit freiem Formaldehyd im Verhältnis zur Wahrscheinlichkeit für deren Umsetzung mit polymergebundenen Einheiten B zu. Diese Effekte fördern die Bindung von freiem Formaldehyd an das Polymerisat und seine Nutzung zur Vernetzung sowie die Ausbildung von Vernetzungsbrücken zwischen verschiedenen Latexteilchen, die zur Verfestigung des Films und seiner Beständigkeit gegen Löse- und Quellungsmittel beitragen.

Vorzugsweise enthält das Emulsionspolymerisat in der zuerst erzeugten Phase (Kern) 2 - 12 Gew.-% an Einheiten B und gegebenenfalls bis zu 10 Gew.-% an Einheiten von Acryl- und/oder Methacrylamid und in der zuletzt erzeugten Phase (Schale) 0,5 bis 10 Gew.-% an Einheiten D, jeweils bezogen auf das Gesamtgewicht des Emulsionspolymerisats. Das Mengenverhältnis der ersten zur letzten Phase kann zwischen 1 : 1 und 10 : 1 liegen. Bevorzugt ist ein Verhältnis von 2 : 1 bis 6 : 1.

Die neuen Kunststoffdispersionen lassen sich mit Feststoffgehalten von beispielsweise 30 bis 65 Gew.-% herstellen, können aber vor der Anwendung zur Faserimprägnierung auf Feststoffgehalte von z.B. 10 bis 30 Gew.-% verdünnt werden. Im unverdünnten Zustand kann ihre Viskosität beispielsweise zwischen 50 und 50.000 mPa s liegen. Sie enthalten in der Regel 0,1 bis 5 Gew.-% an Emulgiermitteln und/oder Schutzkolloiden, vorzugsweise Gemischen aus anionischen und nichtionischen Emulgatoren. Selbstverständlich können bei der Herstellung der neuen Kunststoffdispersionen allgemeine Erkenntnisse auf dem Gebiet der Emulsionspolymerisation in sachgerechter Weise angewendet werden. Dies betrifft z.B. die Mitverwendung spezieller Comonomerer, die Einstellung des Molekulargewichts, der Teilchengröße und Teilchengrößenverteilung einschließlich polymodaler Verteilungszustände oder die Anwendung bekannter Maßnahmen zur Verbesserung der Rührstabilität, der Pigmentierbarkeit oder der Froststabiltät.

Anwendung der Kunststoffdispersion

Die erfindungsgemäßen Kunststoffdispersionen sind zur Filmbildung bei Temperaturen zwischen 0 und 120°C befähigt. Um die Filmbildung zu erleichtern, können der Kunststoffdispersion übliche Filmbidungshilfsmittel, wie flüchtige Lösemittel oder schwer flüchtige Weichmacher für das Emulsionspolymerisat, zugesetzt werden. Die Kunststoffdispersionen können ebenso wie herkömmliche filmbildende, selbstvernetzende wäßrige Kunststoffdispersionen zum Ausrüsten von Faserprodukten eingesetzt werden. Unter Faserprodukten sind Gewebe, Gewirke und Faservliese aus natürlichen oder synthetischen Fasern, insbesondere aus Baumwolle, Zellwolle, Viskose, Celluloseacetat, Polyester, Polyamid, Polyacrylnitril, Polypropylen oder aus Gemischen solcher Fasern zu verstehen. Die Kunststoffdispersion wird beispielsweise durch Tauchen, Sprühen, Pflatschen, Rakeln oder Drucken in einer Menge von beispielsweise 5 bis 100 Gew.-%, berechnet als Trockenprodukt und bezogen auf das Fasergewicht, auf das Faserprodukt aufgebracht. Sie kann dazu mit sauren Katalysatoren, wie p-Toluolsulfonsäure, Citronensäure, Phosphorsäure oder Ammoniumphosphat, mit Farbstoffen oder Pigmenten versetzt, mit Wasser oder Verdickungsmitteln auf die anwendungstechnisch erforderliche Viskosität eingestellt und gegebenenfalls geschäumt werden. Nach dem Trocknen wird die erhaltene Imprägnierung bei Temperaturen von 100 bis 160°C innerhalb von 180 bis 30 sec vernetzt. Man erhält auf diese Weise veredelte Faserprodukte mit einer hervorragenden Beständigkeit gegen die in der Chemischreinigung gebräuchlichen Lösemittel und gegen Weichmacher, die bei dauernder Berührung des Faserproduktes mit Weich-PVC oder anderen stark weichmacherhaltigen Materialien in die Imprägnierung einwandern können.

Der verminderte Gehalt an freiem oder abspaltbarem Formaldehyd macht sich in allen Verarbeitungsstadien von der Herstellung der Dispersion, ihrer Lagerung, Beförderung und Konfektionierung bis zur Imprägnierung, Trocknung und Kondensation vorteilhaft bemerkbar. Die Abgabe von Formaldehyd an die umgebende Atmosphäre wird bei allen Verfahrensschritten deutlich gesenkt.

BEISPIELE

Beispiel 1

In einem 2 l-Reaktionsgefäß, ausgerüstet mit Rückflußkühler, Rührwerk und Zulaufgefäß werden 0,18 g Triisobutylphenolpolyglykolethersulfat-Na-Salz (Ethoxilierungsgrad 7) und 0,36 g Ammoniumperoxidisulfat in

360 g entsalztem Wasser bei 20 Grad C gelöst.

In diese Lösung werden nacheinander 2 Emulsionen bei 80 Grad C unter Rühren zudosiert. Die Zugabe von Emulsion I bestehend aus

603,0 g Ethylacrylat
27,0 g Methacrylamid
45,0 g N-Methylolmethacrylamid
10,13 g Triisobutylphenolpolyglykolethersulfat-Na
1,62 g Ammoniumperoxidisulfat und
420,0 g Wasser

erfolgt innerhalb von 3 Stunden. In direktem Anschluß wird innerhalb der nächsten Stunde die Emulsion II bestehend aus

198,0 g Ethylacrylat
27,0 g N-(2-Methacryloyloxyethyl)ethylenharnstoff
3,38 g Triisobutylphenolpolyglykolethersulfat-Na
0,54 g Ammoniumperoxidisulfat und
135,0 g Wasser

zudosiert.

Nach Zulaufende wird der Ansatz auf Raumtemperatur abgekühlt; hierbei erfolgt bei 70 Grad C die Zugabe von 0,38 g 1,4 Diisopropylbenzolmonohydroperoxid und 0,3 g Natriumformaldehydsulfoxylat. Dann wird die Dispersion filtriert. Der Trockengehalt der Dispersion beträgt ca. 50 %.

Zur Dispersionscharakterisierung siehe Tab. 1.

Die Dispersion hat pH 2,3 und eine Viskosität von 1625 mPa s (Brookfield). Die mittlere Teilchengröße der Latexteilchen beträgt 170 nm.

Beispiel 2

Nach dem in Beispiel 1 beschriebenen Verfahren wird eine Kunststoffdispersion mit folgender Zusammensetzung erzeugt:

Kern: 89,3 Gew.-% Ethylacrylat
6,7 Gew.-% N-Methylolmethacrylamid
4,0 Gew.-% Methacrylamid
Schale: 92,4 Gew.-% Ethylacrylat
7,6 Gew.-% N-(2-Methacryloyloxyethyl)ethylenharnstoff

Die Dispersion hat pH 2,3 und eine Viskosität von 1750 mPa s (Brookfield). Die mittlere Teilchengröße der Latexteilchen beträgt 150 nm.

Vergleichsbeispiel 1

Ein Emulsionspolymerisat mit nahezu gleicher Bruttozusammensetzung wie das von Beispiel 1, jedoch ohne das Ethylenharnstoff-Monomer, wird in einem einstufigen Verfahren aus einer Emulsion von

828,0 g Ethylacrylat
45,0 g Methacrylamid
27,0 g N-Methylolmethacrylamid
13,5 g Triisobutylphenolpolyglykolethersulfat-Na
2,16 g Ammoniumperoxidisulfat und
555,0 g Wasser

während eines 4-stündigen Emusionszulaufs erzeugt. Im übrigen entspricht die Arbeitsweise der ersten Stufe bzw. der Aufarbeitung von Beispiel 1.

Die Dispersion hat pH 2,4 und eine Viskosität von 1500 mPa s (Brookfield). Die mittlere Teilchengröße der Latexteilchen beträgt 140 nm.

Beispiel 3

In einem 2 l-Reaktionsgefäß ausgerüstet mit Rückflußkühler, Rührwerk und Zulaufgefäß werden 0,09 g Triisobutylphenolpolyglykolethersulfat-Na-Salz (Ethoxilierungsgrad 7) und 0,15 g Ammoniumperoxidisulfat in 411 g entsalztem Wasser bei 20 Grad C gelöst.

In diese Lösung werden nacheinander 2 Emulsionen bei 80 Grad C unter Rühren zudosiert. Die Zugabe von Emulsion I bestehend aus

372,6 g Butylacrylat
263,9 g Methylmethacrylat
23,64 g N-Methylolmethacrylamid
6,07 g Methacrylamid
8,77 g Glykoldimethacrylat
3,38 g Triisobutylphenolpolyglykolethersulfat-Na
1,13 g Ammoniumperoxidisulfat und
346,0 g Wasser

erfolgt innerhalb 3 Stunden. Im Anschluß wird innerhalb von 1 Stunde Emulsion II bestehend aus

108,45 g Butylacrylat
89,55 g Methylmethacrylat
27,0 g N-(2-Methacryloyloxyethyl)ethylenharnstoff
1,13 g Triisobutylphenolpolyglykolethersulfat-Na
0,38 g Ammoniumperoxidisulfat und
150,0 g Wasser

zudosiert.

Die Dispersion hat pH 1,8 und eine Viskosität von 55 mPa s (Brookfield). Die mittlere Teilchengröße der Latexteilchen beträgt 285 nm.

Beispiel 4

Nach dem in Beispiel 3 beschriebenen Verfahren wird eine Kunststoffdispersion mit folgender Zusammensetzung hergestellt:

Kern:
55,2 Gew.-% Butylacrylat
39,1 Gew.-% Methylmethacrylat
3,5 Gew.-% N-Methylolacrylamid
0,9 Gew.-% Methacrylamid
1,3 Gew.-% Glykoldimethacrylat

Schale:
56,2 Gew.-% Butylacrylat
39,8 Gew.-% Methylmethacrylat
4,0 Gew.-% N-(2-Methacryloyloxyäthyl)äthylenharnstoff

Die Dispersion hat pH 1,9 und eine Viskosität von 180 mPa s (Brookfield). Die mittlere Teilchengröße der Latexteilchen beträgt 276 nm.

Vergleichsbeispiel 2

Ein Emulsionspolymerisat mit nahezu gleicher Bruttozusammensetzung wie das von Beispiel 3, jedoch ohne das Äthylenharnstoff-Monomer, wird in einem einstufigen Verfahren aus einer Emulsion von

508,5 g Butylacrylat
353,25 g Methylmethacrylat
23,4 g N-Methylolmethacrylamid
5,85 g Methacrylamid
9,0 g Gylkoldimethacrylat
4,5 g Triisobutylphenolpolyglykolethersulfat-Na
1,5 g Ammoniumperoxidisulfat und
496,0 g Wasser

während eines 4-stündigen Emulsionszulaufs erzeugt. Im übrigen entspricht die Arbeitsweise der ersten Stufe bzw. der Aufarbeitung von Beispiel 3. Die Dispersion hat pH 1,9 und eine Viskosität von 42 mPa s (Brookfield). Die mittlere Teilchengröße der Latexteilchen beträgt 315 nm.

Die in den vorstehenden Beispielen und Vergleichsversuchen erzielten Ergebnisse sind in den Tabellen I und II zusammengefaßt. Tabelle I enthält die Eigenschaften der Kunststoffdispersionen, insbesondere die Werte für freien und beim Erhitzen aus der Dispersion abspaltbaren Formaldehyd.

Tabelle II enthält die Ergebnisse der anwendungstechnischen Prüfung der Kunststoffdispersionen. Zu diesem Zweck wurden Polyester-Testgewebe mit den Dispersionen imprägniert, abgequetscht und bei 80°C oder 120°C getrocknet. Der Bindergehalt betrug jeweils 40 bis 50 % des Fasergewichts.

Analysenmethoden

Freier Formaldehyd in der Dispersion wird bestimmt, indem man sie mit der 6- bis 8-fachen Menge Wasser verdünnt, eine Hydroxylammoniumchlorid-Lösung vom pH 2,9 zusetzt und nach 20 min die freigesetzte Salzsäure titriert. 1 Mol freigesetzte Salzsäure entspricht 1 Mol Formaldehyd (Angabe in % bez. Gewicht der Dispersion).

Als abspaltbarer Formaldehyd wird die Gesamtmenge von freiem und von in Form von N-Methylolamiden gebundenem Formaldehyd, soweit er beim Erhitzen freigesetzt wird, bezeichnet. Eine Probe der Dispersion wird mit Quarzsand vermischt und 15 min auf 140°C erhitzt. Der gasförmig freigesetzte Formaldehyd wird bestimmt (Angabe in % bez. Gewicht der Dispersion).

Die Binderverluste bei der Behandlung der imprägnierten Testgewebe mit Aceton (BAV) oder durch Kochwäsche (BKV) werden jeweils für Trocknungstemperaturen des Testgewebes von 80 und 120°C angegeben. Zur Bestimmung des BAV werden die Gewebeproben 20 min bei 20°C in einem Laborwaschgerät mit Aceton behandelt, mit Trichloräthylen gespült, bei 80°C getrocknet und der Gewichtsverlust in %, bez. auf den Bindergehalt, bestimmt.

Zur Bestimmung des Kochwaschverlustes (BKV) werden die imprägnierten Gewebeproben 10 min in einem Laborwaschgerät in Seifenlauge bei 90°C gewaschen, gespült, getrocknet und der Gewichtsverlust in %, bez. auf den Bindergehalt, bestimmt.

Die Wasseraufnahme und die Quellung durch Methylisobutylketon (MIBK) werden an einem 0,5 mm dicken Film, der durch Eintrocknen einer Probe der zu untersuchenden Dispersion bei 40 bis 80°C (je nach der Mindestfilmbildungstemperatur der Dispersion) und Kondensieren während 5 min.bei 140°C hergestellt worden ist, ermittelt. Der Film wird bei 20°C während 30 min bzw. 4 Stunden in Wasser bzw. MIBK quellen gelassen, abgetupft und die prozentuale Gewichtszunahme bestimmt.

TABELLE 1: Eigenschaften der Kunststof. .spersion

| Beisp. Nr. | Polymerzusammensetzung | | | | | | | pH | Viskosität nach Brookfield (mPa s) | Teilchendurchmesser (nm) | Formaldehyd frei (ppm) | abspaltb. (ppm) |
|---|---|---|---|---|---|---|---|---|---|---|---|---|
| 1 | | A -- | D - | E - | F | | | | | | | |
| | Br: | 89 | 5 | 3 | 3 | | | 2,3 | 1625 | 170 | 150 | 580 |
| | K: | 89,3 | 6,7 | 4 | - | | | | | | | |
| | S: | 88 | - | - | 12 | | | | | | | |
| 2 | | A | D | E | F | | | | | | | |
| | Br: | 90,1 | 5 | 3 | 1,9 | | | 2,3 | 1750 | 150 | 450 | 1040 |
| | K: | 89,3 | 6,7 | 4 | - | | | | | | | |
| | S: | 92,4 | - | - | 7,6 | | | | | | | |
| Vgl.1 | | A | D | E | | | | | | | | |
| | Br: | 92 | 5 | 3 | | | | 2,4 | 1500 | 140 | 880 | 1330 |
| 3 | | B | C | D | E | F | G | | | | | |
| | Br: | 53,5 | 39,25 | 2,6 | 0,65 | 3 | 1 | 1,8 | 55 | 285 | 320 | 440 |
| | 75%K: | 55,2 | 39,1 | 3,8 | 0,9 | - | 1,3 | | | | | |
| | 25%S: | 48,2 | 39,8 | - | - | 12 | - | | | | | |
| 4 | | B | C | D | E | F | G | | | | | |
| | Br: | 55,5 | 39,25 | 2,6 | 0,65 | 1 | 1 | 1,9 | 180 | 275 | 550 | 570 |
| | 75%K: | 55,2 | 39,1 | 3,5 | 0,9 | - | 1,3 | | | | | |
| | 25%S: | 56,2 | 39,8 | - | - | 4 | - | | | | | |
| Vgl.2 | | B | C | D | E | G | | | | | | |
| | Br: | 56,3 | 39,25 | 2,6 | 0,65 | 1 | | 1,9 | 42 | 315 | 790 | 890 |

A: Ethylacrylat
B: Butylacrylat
C: Methylmethacrylat
D: N-Methylolmethacrylamid
E: Methacrylamid
F: N-(2-Methacryloyloxyethyl)-ethylenharnstoff
G: Glykoldimethacrylat

Br: Bruttozusammensetzung in Gew.-%
K : Zusammensetzung der Kernphase in Gew.-%
S : Zusammensetzung des Schalenmaterials in Gew.-%

TABELLE II: Eigenschaften der ausgerüsteten Textilien

| Beisp. Nr. | BAV % | BKV % | Wasseraufnahme 0,5 h (%) | 4h (%) | MIBK-Aufnahme 0,5 h (%) | 4h (%) |
|---|---|---|---|---|---|---|
| 1 | 2,6/1 | 2,8/1 | 2,7 | 5,2 | 57 | 75 |
| 2 | 2,7/1 | 1,6/<1 | 2,8 | 5,5 | 67 | 78 |
| Vgl.1 | 3,7/1 | 2,7/<1 | 1,4 | 3,4 | 78 | 92 |

Bewertung der Ergebnisse

Die erfindungsgemäßen Kunststoffdispersionen nach den Beispielen 1 bis 4 zeigen durchweg niedrigere Gehalte an freiem und abspaltbarem Formaldehyd als die Vergleichsdispersionen 1 und 2 ohne Ureidogruppen. Dennoch sind die Ergebnisse der anwendungstechnischen Prüfung nicht schlechter, z.T. sogar deutlich besser als bei den Vergleichsdispersionen. BAV und BKV zeigen den Vernetzungsgrad der Impägnierung an. Die Binderverluste sind umso geringer je besser die Vernetzung ist. Ebenso ist die Quellung der Filme in MIBK umso geringer je besser das Polymerisat vernetzt ist.

## Patentansprüche

1. Filmbildende, selbstvernetzende wäßrige Kunststoffdispersion, enthaltend ein Emulsionspolymerisat aus
   A) einem überwiegenden Anteil eines äthylenisch ungesättigten, radikalisch polymerierbaren Monomeren oder eines Gemisches solcher Monomeren, welches ein Polymerisat bzw. Copolymerisat mit einer Glasübergangstemperatur nicht über 120°C ergibt,
   B) N-Methylol-acrylamid oder -methacrylamid oder einem verkappten Derivat davon,
   und gegebenenfalls
   C) weiteren äthylenisch ungesättigten, radikalisch polymerierbaren Monomeren,
   dadurch gekennzeichnet,
   daß das Emulsionspolymerisat weiterhin Einheiten von
   D) einem äthylenisch ungesättigten, radikalisch polymerisierbaren Monomer mit der Atomgruppierung

   $$\overset{/}{-\mathrm{N}}-\mathrm{CO}-\mathrm{NH}-$$

   enthält.

2. Kunststoffdispersion nach Anspruch 1, dadurch gekennzeichnet, daß das Emulsionspolymerisat wenigstens zwei verschiedene Polymerisatphasen enthält, von denen die eine die überwiegenden Anteil der Komponente B und die andere den überwiegenden Anteil der Komponente D enthält.

3. Kunststoffdispersion nach Anspruch 2, dadurch gekennzeichnet, daß das Emulsionspolymerisat in der zuerst erzeugten Phase (Kern) 2 - 12 Gew.-% an Einheiten B und gegebenenfalls bis zu 10 Gew.-% an Einheiten von Acryl- und/oder Methacrylamid und in der zuletzt erzeugten Phase (Schale) 0,5 bis 10 Gew.-% an Einheiten D enthält.

4. Kunststoffdispersion nach einem oder mehreren der Ansprüche 1 bis 3, dadurch gekennzeichnet, daß als äthylenisch ungesättigtes, radikalisch polymerisierbares Monomer mit der Atomgruppierung >N - CO - NH - eine Verbindung der Formeln I, II oder III

R - NR'- CO - NR'H    I

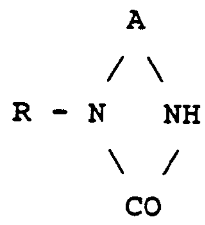

II

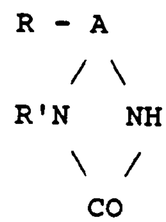

III

am Aufbau des in der Kunststoffdispersion enthaltenen Emulsionspolymerisats beteiligt ist, worin R einen zur radikalischen Polymerisation befähigten, äthylenisch ungesättigten Rest, R'ein Wasserstoffatom oder einen Alkylrest mit 1 bis 8 Kohlenstoffatomen und A eine 2-oder 3-gliedrige, gegebenenfalls eine Carbonylgruppe aufweisende Alkylengruppe bedeuten.

5. Kunststoffdispersion nach Anspruch 4, dadurch gekennzeichnet, daß der Rest R in den Monomeren der Formeln I bis III die Struktur

$$CH_2 = CR'' - CO - O - Alk -$$

hat, worin R" Wasserstoff oder eine Methylgruppe und Alk eine Alkylenkette mit 2 bis 8 Kohlenstoffatomen bedeuten.

6. Kunststoffdispersion nach Anspruch 4 oder 5, dadurch gekennzeichnet, daß sich das Monomer der Formel II oder III von Äthylenharnstoff oder Propylenharnstoff ableitet.

7. Kunststoffdispersion nach einem oder mehreren der Ansprüche 1 bis 6, dadurch gekennzeichnet, daß die Komponente A zu mehr als 90 Gew.-% aus Alkylestern der Acryl- und/oder Methacrylsäure mit 1 bis 12 Kohlenstoffatomen im Alkylrest oder/und Styrol besteht.

8. Verwendung der Kunststoffdispersion nach einem oder mehreren der Ansprüche 1 bis 7 zum Ausrüsten von Faserprodukten.

9. Verfahren zur Herstellung einer Kunststoffdispersion nach Anspruch 2 durch Emulsionspolymerisation von

A) einem überwiegenden Anteil eines äthylenisch ungesättigten, radikalisch polymerierbaren Monomeren oder eines Gemisches solcher Monomeren, welches ein Polymerisat bzw. Copolymerisat mit einer Glasübergangstemperatur nicht über 120°C ergibt,

B) N-Methylol-acrylamid oder -methacrylamid oder einem verkappten Derivat davon,

und gegebenenfalls

C) weiteren äthylenisch ungesättigten, radikalisch polymerierbaren Monomeren,

in wäßriger Phase in zwei Stufen, wobei man den überwiegenden Teil der Komponente B in der ersten Stufe einsetzt,

dadurch gekennzeichnet,

daß in der zweiten Stufe als Komponente D ein äthylenisch ungesättigtes, radikalisch polymerisierbares Monomer mit der Atomgruppierung

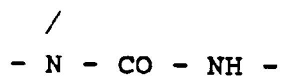

eingesetzt wird.

## Claims

1. A film-forming, self-cross-linking, aqueous plastics dispersion containing an emulsion polymer consisting of
   A) a main part of an ethylenically unsaturated, radically polymerisable monomer or a mixture of such monomers which produces a polymer or copolymer with a glass transition temperature not exceeding 120°C,
   B) N-methylol-acrylamide or -methacrylamide or a masked derivative thereof,
   and, optionally,
   C) a further ethylenically unsaturated, radically polymerisable monomer,
   characterised
   in that the emulsion polymer further contains units of
   D) an ethylenically unsaturated, radically polymerisable monomer with the atomic grouping

   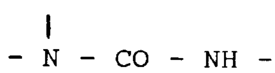 .

2. A plastics dispersion according to claim 1, characterised in that the emulsion polymer contains at least two different polymer phases, one of which contains the main part of component B and the other contains the main part of component D.

3. A plastics dispersion according to claim 2, characterised in that the emulsion polymer contains 2 to 12 wt.% of units B and, optionally, up to 10 wt.% of acryl- and/or methacrylamide units in the phase (core) produced at first, and 0.5 to 10 wt.% of units D in the phase (shell) produced last.

4. A plastics dispersion according to one or more of claims 1 to 3, characterised in that a compound of Formulae I, II or III

   R - NR'- CO - NR'H     I

   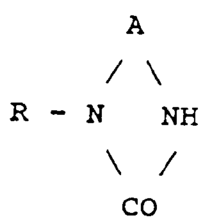     II

   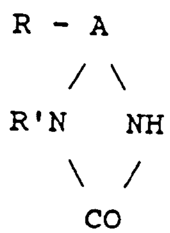     III

used as the ethylenically unsaturated, radically polymerisable monomer with the atomic grouping >N - CO - NH -, is part of the composition of the emulsion polymer contained in the plastics dispersion wherein R is an ethylenically unsaturated group capable of radical polymerisation, R' is a hydrogen atom or an alkyl group having 1 to 8 carbon atoms, and A is a 2- or 3- membered alkylene group which may, optionally, contain a carbonyl group.

5. A plastics dispersion according to claim 4, characterised in that the group R in the monomers of Formulae I to III has the structure

$$CH_2 = CR'' - CO - O - Alk -$$

wherein R" is hydrogen or a methyl group and Alk is an alkylene chain having 2 to 8 carbon atoms.

6. A plastics dispersion according to claim 4 or 5, characterised in that the monomer of Formula II or III is derived from ethylene urea or propylene urea.

7. A plastics dispersion according to one or more of claims 1 to 6, characterised in that the component A consists, in an amount of more than 90 wt.%, of alkyl esters of acrylic and/or methacrylic acid having 1 to 12 carbon atoms in the alkyl group and/or styrene.

8. Use of the plastics dispersion according to one or more of claims 1 to 7, for finishing fibre products.

9. A process for preparing a plastics dispersion according to claim 2 by emulsion polymerisation of

A) a main part of an ethylenically unsaturated, radically polymerisable monomer or a mixture of such monomers which produces a polymer or copolymer with a glass transition temperature not exceeding 120°C,

B) N-methylol-acrylamide or -methacrylamide or a masked derivative thereof

and, optionally,

C) further ethylenically unsaturated, radically polymerisable monomers,

in an aqueous phase in two stages, the main part of Component B being used in the first stage, characterised in that an ethylenically unsaturated, radically polmerisable monomer having the atomic grouping

$$-\overset{|}{N} - CO - NH -$$

is used as Component D in the second stage.

## Revendications

1. Dispersion aqueuse de matière plastique autoréticulante filmogène, contenant un produit de polymérisation en émulsion composé

A) d'une part prédominante d'un monomère à insaturation éthylénique, susceptible de polymérisation radicalaire, ou d'un mélange de tels monomères, qui donne un polymère ou un copolymère ayant une température de transition vitreuse non supérieure à 120°C,

B) de N-méthylol-acrylamide ou -méthacrylamide ou d'un dérivé masqué de celui-ci,

et éventuellement

C) d'autres monomères à insaturation éthylénique, susceptibles de polymérisation radicalaire, caractérisée en ce que le produit de polymérisation en émulsion contient en outre des motifs

D) d'un monomère à insaturation éthylénique, susceptible de polymérisation radicalaire, renfermant le groupement d'atomes

$$-\overset{|}{N} - CO - NH -$$

2. Dispersion de matière plastique selon la revendication 1, caractérisée en ce que le produit de polymérisation en émulsion contient au moins deux phases de polymères différentes, dont l'une contient la majeure partie du composant B et l'autre contient la majeure partie du composant D.

3. Dispersion de matière plastique selon la revendication 2, caractérisée en ce que le produit de polymérisation en émulsion contient, dans la phase produite en premier lieu (noyau), de 2 à 12% en poids de motifs B et éventuellement jusqu'à 10% en poids de motifs d'acryl- et/ou méthacrylamide et, dans la phase produite en dernier lieu (enveloppe), de 0,5 à 10% en poids de motifs D.

4. Dispersion de matière plastique selon l'une quelconque des revendications 1 à 3, caractérisée en ce qu'il participe à la constitution du produit de polymérisation en émulsion contenu dans la dispersion de matière plastique, en tant que monomère à insaturation éthylénique, susceptible de polymérisation radicalaire, renfermant le groupement d'atomes >N - CO - NH -, un composé de formule I, II ou III

R - NR' - CO - NR'H   I

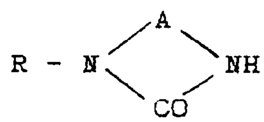

II

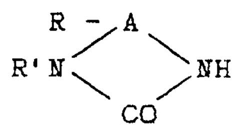

III

dans laquelle R représente un reste à insaturation éthylénique, susceptible de polymérisation radicalaire, R' représente un atome d'hydrogène ou un reste alkyle à 1-8 atomes de carbone et A représente un groupement alkylène à 2 ou 3 maillons, comportant éventuellement un groupement carbonyle.

5. Dispersion de matière plastique selon la revendication 4, caractérisée en ce que le reste R dans les monomères de formules I à III a la structure

$CH_2$ = CR" - CO - O - Alk -

dans laquelle R" représente un atome d'hydrogène ou un groupement méthyle et AIL représente une chaîne alkylène à 2-8 atomes de carbone.

6. Dispersion de matière plastique selon la revendication 4 ou 5, caractérisée en ce que le monomère de formule II ou III dérive d'éthylène-urée ou de propylène-urée.

7. Dispersion de matière plastique selon l'une quelconque des revendications 1 à 6, caractérisée en ce que le composant A est constitué, pour plus de 90% en poids, par des esters alkyliques de l'acide acrylique et/ou méthacrylique à 1-12 atomes de carbone dans le reste alkyle et/ou par du styrène.

8. Utilisation de la dispersion de matière plastique selon l'une quelconque des revendications 1 à 7 pour l'apprêt de produits fibreux.

9. Procédé de préparation d'une dispersion de matière plastique selon la revendication 2, par polymérisation en émulsion
   A) d'une part prédominante d'un monomère à insaturation éthylénique, susceptible de polymérisation radicalaire, ou d'un mélange de tels monomères, qui donne un polymère ou un copolymère ayant une température de transition vitreuse non supérieure à 120°C,
   B) de N-méthylol-acrylamide ou -méthacrylamide ou d'un dérivé masqué de celui-ci,
   et éventuellement
   C) d'autres monomères à insaturation éthylénique, susceptibles de polymérisation radicalaire,
   en phase aqueuse en deux étapes, avec utilisation de la majeure partie du composant B dans la première étape,
   caractérisé en ce qu'on utilise dans la seconde étape, en tant que composant D, un monomère à insaturation éthylénique, susceptible de polymérisation radicalaire, renfermant le groupement d'atomes